# FASCICULE DE BREVET EUROPEEN

(11) **EP 1 850 673 B1**
(45) Date de publication et mention de la délivrance du brevet: **20.08.2008**
(21) Numéro de dépôt: 06709224.7
(22) Date de dépôt: 01.02.2006
(51) Int. Cl.: A22C 7/00

(54) **PROCEDE ET MOULE POUR LA PREPARATION D'UNE COMPOSITION ALIMENTAIRE DU TYPE « KEBAB »**
VERFAHREN UND FORM ZUR HERSTELLUNG EINES KEBAB-ARTIGEN NAHRUNGSMITTELPRODUKTS
METHOD AND MOULD FOR THE PREPARATION OF A KEBAB-TYPE FOOD COMPOSITION

(30) Priorité: 22.02.2005 FR 0501804
(43) Date de publication de la demande: 07.11.2007
(73) Titulaire: France Kebab SAS, F-50000 Saint Lô (FR)
(72) Inventeur: THIBAUT, Bernard, F-50180 Agneaux (FR); MEYER, Johan, B-2950 Kapellen (BE)
(74) Mandataire: Maillet, Alain
(86) Numéro de dépôt international: PCT/FR2006/000232
(87) Numéro de publication internationale: WO 2006/090041

(56) Documents cités:
- EP-A- 0 452 528
- EP-A- 1 258 197
- FR-A- 2 865 622
- US-A- 3 340 798
- US-A- 4 744 130

## Description

L'invention concerne un procédé et un moule pour sa mise en oeuvre destinés à la préparation d'une composition alimentaire, du type « kebab », généralement :
a) réalisée par l'assemblage de matières alimentaires crues, notamment du veau, de la dinde et du poulet, indifféremment hachées, en morceaux de formes et de dimensions quelconques ou en forme de disques ;
b) mise en forme dans un moule de forme générale tronconique, ouvert sur sa partie supérieure, pourvu d'une broche centrale tubulaire amovible ;
c) utilisée en restauration placée sur un grill vertical de cuisson au moyen de la broche autour de laquelle elle a été fabriquée. Un tel moule et procédé est connu du EP-A-1258197.

Dans la pratique courante, le « kebab » est fabriqué de manière artisanale (manuellement) et est généralement commercialisé cru.
Le coût de la main d'oeuvre représente une part importante du coût du produit fini et
l'hygiène constitue une composante non maîtrisée.
En outre, l'assemblage fait par l'empilage de matières diverses, n'apporte pas la stabilité souhaitée, aussi bien pendant les manipulations, qu'en cours de cuisson chez l'utilisateur final.
Des solutions industrielles ont été conçues :
a) avec des moules dont le corps est démontable pour faciliter le démoulage de compositions crues comme par exemple celui décrit dans le brevet US4648153 ;
b) avec des moules dont le corps n'est pas démontable et qui sont destinés à précuire des compositions crues comme par exemple celui décrit dans le brevet FR2865622 du même déposant qui comporte une ouverture de remplissage opposée à l'ouverture de démoulage et un couvercle emboîtable fixé sur le corps.
Cette dernière solution s'est avérée peu pratique d'utilisation et plus complexe de réalisation à cause des ouvertures de remplissage et de démoulage opposées et n'a pas donné de bons résultats quant au maintien physique du produit précuit qui avait tendance à se désagréger pendant les manipulations, le transport et la cuisson chez l'utilisateur final.

L'invention vise à réaliser un moule et à mettre en oeuvre un procédé qui éliminent les inconvénients susmentionnés.
Elle concerne à cet effet un procédé qui se caractérise en ce qu'il consiste :
a) à disposer, à l'intérieur de l'ouverture supérieure du moule, une fois celui-ci rempli par la composition alimentaire, un dispositif destiné à comprimer, de manière continue, ladite composition alimentaire et à obturer ladite ouverture ;
b) à précuire, directement dans ledit moule, ladite composition comprimée, au moyen d'une source de chaleur apte à la pasteuriser ;
c) à éventuellement placer à l'intérieur du corps du moule, avant l'introduction de la composition alimentaire, une poche thermorétractable, apte à supporter les températures de précuisson, qui est rabattue sur ladite composition avant la mise en place du dispositif de compression.
Elle concerne également un moule pour la mise en oeuvre dudit procédé qui se caractérise essentiellement en ce que la paroi latérale de révolution tronconique est surmontée d'une paroi cylindrique dans laquelle coulisse le dispositif d'obturation et de compression qui possède une forme intérieure concave fraction-sphérique et qui exerce sur le dessus de la composition alimentaire, ou sur la partie rabattue de la poche thermorétractable, une pression continue apte à comprimer ladite composition et à donner à sa partie supérieure une forme convexe fraction-sphérique.
Les particularités nouvelles et originales et les avantages résultant de la mise en oeuvre de ladite invention sont les suivants :
a) concernant la forme du produit fini : le moule permet la fabrication d'un produit tronconique dont la partie haute est convexe : ladite forme convexe est obtenue avantageusement par l'utilisation d'un dispositif d'obturation et de compression qui possède une forme intérieure concave fraction-sphérique ;
b) concernant sa tenue : elle est améliorée, d'une part, par la conception même du moule (mise en forme sous pression dans une enceinte fermée) et, d'autre part, par le cycle de précuisson qui se fait à une température généralement supérieure à 65°C ;
c) concernant le risque alimentaire :
   - lors du processus de fabrication, il n'y a plus de manipulation manuelle du produit alimentaire ;
   - après le remplissage du moule, le produit est cuit (pasteurisé) et est contenu dans une poche fermée, réduisant ainsi de manière importante les risques inhérents à l'utilisation de produits crus ;
d) concernant le coût de fabrication : grâce à sa conception et au cycle de cuisson associé, le moule en question accroît de manière importante la rentabilité, tant au niveau des coûts de production (dans le rapport de 1 à 16 concernant les temps de fabrication), qu'au niveau des pertes en volume de matière en cours de cuisson (30 à 40% de pertes sur un produit cuit uniquement chez l'utilisateur final contre 5 à 10% sur un produit précuit dans le moule) ;
e) concernant l'utilisation :
   - le temps de cuisson finale est considérablement réduit avec pour conséquence induite la réduction du risque alimentaire ;
   - l'énergie globale dépensée et la puissance des appareils de grill s'en trouvent également réduites (dans un rapport de 1 à 8).

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.
Sur ces dessins :

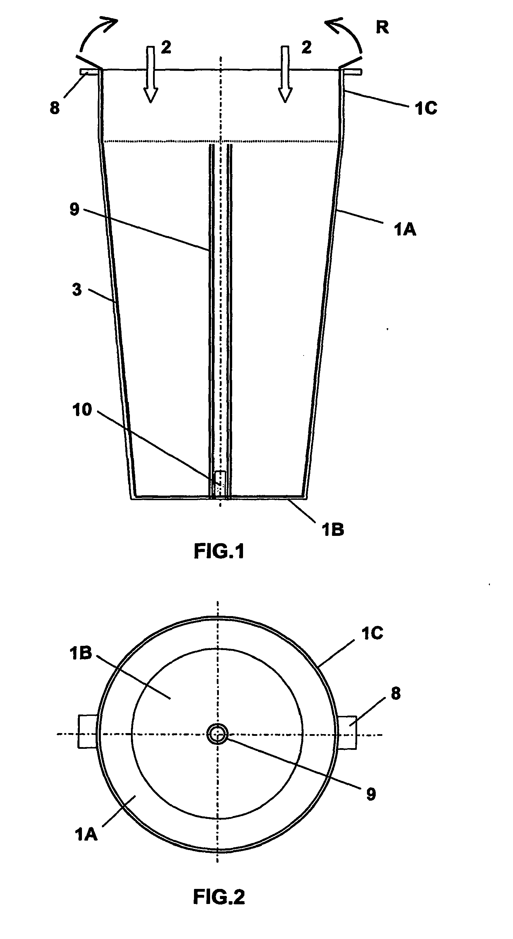

- la figure 1 est une vue en coupe longitudinale du corps du moule selon l'invention, en situation de remplissage ;
- la figure 2 est une vue de dessus dudit corps de moule ;

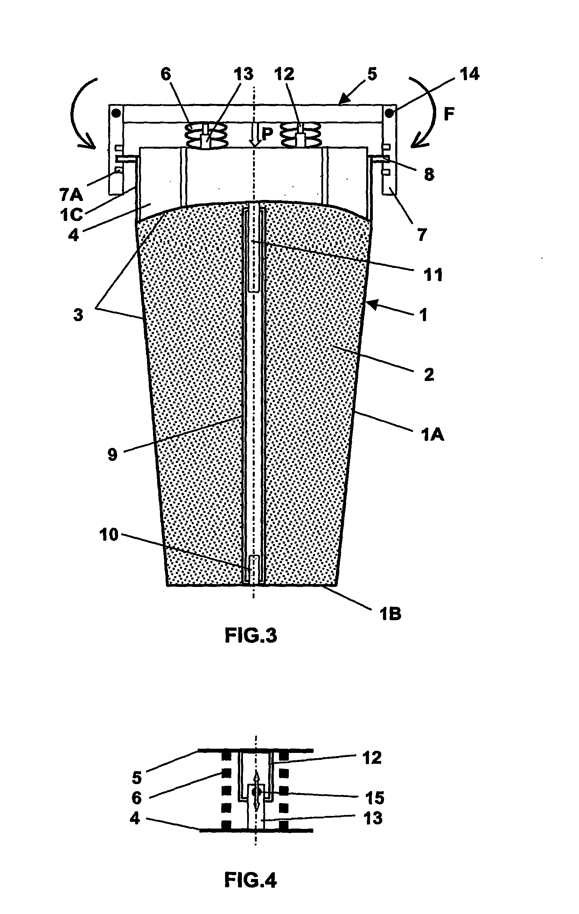

- la figure 3 est une vue en coupe longitudinale du moule selon l'invention, en situation de précuisson ;
- la figure 4 est une vue de détail en coupe longitudinale du ressort et des pièces qui le soutiennent.

Une composition alimentaire du type « kebab » est généralement :
a) réalisée par l'assemblage de matières alimentaires crues, notamment du veau, de la dinde et du poulet, indifféremment hachées, en morceaux de formes et de dimensions quelconques ou en forme de disques ;
b) mise en forme dans un moule métallique (1) constitué d'une paroi latérale de révolution tronconique (1A) fermée par un fond (1 B), ouvert sur sa partie supérieure, pourvu d'une broche centrale tubulaire (9), amovible ;
c) destinée à être utilisée en restauration placée sur un grill vertical de cuisson au moyen de la broche (9) autour de laquelle elle a été préparée.
Le procédé de préparation de la composition alimentaire selon l'invention consiste :
a) à disposer, à l'intérieur de l'ouverture supérieure du moule (1), une fois celui-ci rempli par la composition alimentaire (2), un dispositif (4) destiné à comprimer, de manière continue, ladite composition alimentaire et à obturer ladite ouverture ;
b) à précuire, directement dans ledit moule, ladite composition comprimée, au moyen d'une source de chaleur apte à la pasteuriser.
Selon une variante de réalisation de l'invention, le procédé en question consiste à placer, à l'intérieur du corps du moule (1), avant l'introduction de la composition alimentaire (2), une poche thermorétractable (3), de qualité alimentaire, apte à supporter les températures de précuisson, qui est rabattue (R) sur ladite composition avant la mise en place du dispositif de compression (4).
Le procédé d'utilisation du moule tel que décrit ci-avant consiste :
a) à placer à l'intérieur du corps du moule (1) une poche thermorétactable (3) ;

a) à emboîter l'extrémité inférieure de la broche (9), au travers du fond de ladite poche, sur le support axial (10) solidaire du fond du corps du moule (1) ;
b) à remplir la poche (3) ainsi positionnée de matières alimentaires crues (2) ;
c) à placer le dispositif d'obturation (4) en emboîtant le support axial (11) à l'intérieur de la partie supérieure de la broche (9) ;
d) à disposer le dispositif de compression et de verrouillage (5) sur ledit dispositif d'obturation ;
d) à précuire le contenu dudit moule au moyen d'une source de chaleur appropriée.
Le moule pour la mise en oeuvre dudit procédé comporte une paroi cylindrique (1C) surmontant la paroi latérale de révolution tronconique (1A), dans laquelle coulisse le dispositif d'obturation et de compression (4) qui possède une forme intérieure concave fraction-sphérique et qui exerce sur le dessus de la composition alimentaire (2), ou sur la partie rabattue (R) de la poche thermorétractable (3), une pression continue (P) apte à comprimer ladite composition et à donner à sa partie supérieure une forme convexe fraction-sphérique.
La partie supérieure (1A) du corps du moule (1) est cylindrique sur une longueur égale à celle du déplacement du dispositif d'obturation (4) à l'intérieur dudit moule.
La pression continue (P) exercée par le dispositif d'obturation et de compression (4) sur la composition alimentaire (2) est assurée par un dispositif de compression et de verrouillage (5) qui possède des moyens (6), du type ressorts, aptes à prendre appui sur le dessus dudit dispositif d'obturation et des moyens de fixation réglables (7) associés à des moyens d'ancrage (8) solidaires du corps du moule (1).
Les ressorts (6) absorbent les variations de volume de la composition alimentaire en cours de précuisson.
Les moyens de compression (6), du type ressorts, sont maintenus par deux pièces (12) et (13), coulissant l'une par rapport à l'autre, la première (12) étant solidaire du dispositif de compression (5) et la deuxième (13) du dispositif d'obturation (4).
Les moyens de fixation réglables (7) comportent des crans (7A) destinés à être en prise avec les moyens d'ancrage (8).
La broche centrale tubulaire (9) est maintenue, à sa partie inférieure, par un support axial (10) solidaire du fond (1B) du corps du moule (1) et, à sa partie supérieure, par un support axial (11) solidaire du dispositif d'obturation (4).
Le dispositif d'obturation (4) comporte des canaux (4A) destinés à évacuer les vapeurs en cours de précuisson.
Le produit ainsi obtenu, qui est pasteurisé et qui est contenu dans la poche thermorétractable de précuisson, peut être commercialisé, soit en l'état, soit surgelé. Il est destiné à être utilisé sur un gril de cuisson.

Bien entendu, l'invention n'est pas limitée aux modes de réalisation décrits et représentés pour lesquels on pourra prévoir d'autres variantes, en particulier dans :
- la forme, les dimensions et la nature des morceaux de matières alimentaires entrant dans la composition du « kebab » ;
- la forme et les dimensions des divers sous-ensembles entrant dans la composition du moule ainsi que leur capacité à supporter les températures de précuisson ;
- la nature, la forme et les dimensions de la poche thermorétractable de qualité alimentaire utilisée ;
- la nature desdits sous-ensembles (acier inoxydable ou tout autre matériau) à la condition que toutes les pièces au contact des matières alimentaires soient prévues à cet effet.

## Revendications

1. Procédé pour la préparation d'une composition alimentaire (2), du type « kebab », généralement :
a) réalisée par l'assemblage de matières alimentaires crues, notamment du veau, de la dinde et du poulet, indifféremment hachées, en morceaux de formes et de dimensions quelconques ou en forme de disques ;
b) mise en forme dans un moule métallique (1) constitué d'une paroi latérale de révolution tronconique (1A) fermée par un fond (1B), ouvert sur sa partie supérieure, pourvu d'une broche centrale tubulaire (9), amovible ;
c) destinée à être utilisée en restauration placée sur un grill vertical de cuisson au moyen de la broche (9) autour de laquelle elle a été préparée ;
**caractérisé en ce qu'**il consiste :
a) à disposer, à l'intérieur de l'ouverture supérieure du moule (1), une fois celui-ci rempli par la composition alimentaire (2), un dispositif (4) destiné à comprimer, de manière continue, ladite composition alimentaire et à obturer ladite ouverture ;
b) à précuire, directement dans ledit moule, ladite composition comprimée, au moyen d'une source de chaleur apte à la pasteuriser.

2. Procédé, selon la revendication 1, **caractérisé en ce qu'**il consiste à placer à l'intérieur du corps du moule (1), avant l'introduction de la composition alimentaire (2), une poche thermorétractable (3), apte à supporter les températures de précuisson, qui est rabattue (R) sur ladite composition avant la mise en place du dispositif de compression (4).

3. Moule pour la mise en oeuvre du procédé selon la revendication 1 ou 2, **caractérisé en ce que** la paroi latérale de révolution tronconique (1A) est surmontée d'une paroi cylindrique (1C) dans laquelle coulisse le dispositif d'obturation et de compression (4) qui possède une forme intérieure concave fraction-sphérique et qui exerce sur le dessus de la composition alimentaire (2), ou sur la partie rabattue (R) de la poche thermorétractable (3), une pression continue (P) apte à comprimer ladite composition et à donner à sa partie supérieure une forme convexe fraction-sphérique.

4. Moule, selon la revendication 3, **caractérisé en ce que** la pression continue (P) exercée par le dispositif d'obturation et de compression (4) sur la composition alimentaire (2) est assurée par un dispositif de compression et de verrouillage (5) qui possède des moyens (6), du type ressorts, aptes à prendre appui sur le dessus dudit dispositif d'obturation et des moyens de fixation réglables (7) associés à des moyens d'ancrage (8) solidaires du corps du moule (1).

5. Moule, selon la revendication 4, **caractérisé en ce que** les moyens de compression (6), du type ressorts, sont maintenus par deux pièces (12) et (13), coulissant l'une par rapport à l'autre, la première (12) étant solidaire du dispositif de compression (5) et la deuxième (13) du dispositif d'obturation (4).

6. Moule, selon la revendication 4, **caractérisé en ce que** les moyens de fixation réglables (7) comportent des crans (7A) destinés à être en prise avec les moyens d'ancrage (8).

7. Moule, selon la revendication 3, **caractérisé en ce que** la broche centrale tubulaire (9) est maintenue, à sa partie inférieure, par un support axial (10) solidaire du fond (1B) du corps du moule (1) et, à sa partie supérieure, par un support axial (11) solidaire du dispositif d'obturation (4).

8. Moule, selon la revendication 3, **caractérisé en ce que** le dispositif d'obturation (4) comporte des canaux (4A) destinés à évacuer les vapeurs en cours de précuisson.

## Claims

1. Method for the preparation of a kebab-type food composition (2), usually:
a) Made by assembling raw foodstuffs, including veal, turkey and chicken, chopped into random shapes and sizes or in disc form;
b) Formed in a metal mould (1) comprising a rotating, tapered side wall (1A) finished with a base (1B), open at the top and fitted with a removable, central tubular shaft (9);
c) For use in catering, placed over a vertical grill using the shaft (9) around which it has been prepared;
**Characterised in that**:
a) It has, inside the top opening of the mould (1), a device (4) intended to continually compress the food composition (2) with which it is filled and seal the said opening;
b) It pre-cooks, directly inside the said mould, the said compressed composition, using a heat source able to pasteurise it.

2. Method, according to claim 1, **characterised in that** it consists of placing inside the body of the mould (1), before introducing the food composition (2), a thermoretractable pocket (3), able to withstand pre-cooking temperatures, which is closed (R) over the said composition before inserting the compression device (4).

3. Mould for implementing the process according to claim 1 or 2, **characterised in that** the rotating, tapered side wall (1A) is topped by a cylindrical wall (1C) into which slides the sealing and compression device (4) which has a part-spherical, concave internal shape and which exerts, on the top of the food composition (2), or on the closed over section (R) of the thermoretractable pocket (3), continuous pressure (P) which compresses the said food composition and gives its upper section a part-spherical, convex shape.

4. Mould, according to claim 3, **characterised in that** the continuous pressure (P) exerted by the sealing and compression device (4) on the food composition (2) is ensured by a compression and locking device (5) which has spring-type fittings (6) which press down on the said sealing device and adjustable fixings (7) linked to anchoring devices (8) integral to the body of the mould (1).

5. Mould, according to claim 4, **characterised in that** the spring-type compression fittings (6) are held by two parts (12) and (13), which slide into one another, the first (12) being integral to the compression device (5) and the second (13) to the sealing device (4).

6. Mould, according to claim 4, **characterised in that** the adjustable fixings (7) have notches (7A) for accepting the anchoring devices (8).

7. Mould, according to claim 3, **characterised in that** the central tubular shaft (9) is held, at the lower end, by an axial support (10) integral to the base (1B) of the mould body (1) and at the upper end, by an axial support (11) integral to the sealing device (4).

8. Mould, according to claim 3, **characterised in that** the sealing device (4) has tubes (4A) for removing steam during pre-cooking.

## Patentansprüche

1. Verfahren zum Zubereiten einer Nahrungsmittelzusammensetzung (2) des Typs "Kebab", im Allgemeinen:
a) hergestellt durch zusammenfügen roher Nahrungsmittel, insbesondere Kalb, Pute und Hühnchen, die beliebig gehackt sind, in Stücken mit beliebigen Formen und Maßen oder in Form von Scheiben;
b) Formen in einer Metallform (1) bestehend aus einer kegelstumpfförmigen Rotationsseitenwand (1A), die durch einen Boden (1B) geschlossen ist, auf ihrem oberen Teil offen ist, versehen mit einem zentralen röhrenförmigen Spieß (9), der abnehmbar ist;
c) dazu bestimmt, im Restaurantbetrieb auf einem senkrechten Gargrill mittels des Spießes (9), um den sie zubereitet wurde, platziert zu werden;
**dadurch gekennzeichnet, dass** es aus Folgendem besteht:
a) im Inneren der oberen Öffnung der Form (1), sobald diese mit der Nahrungsmittelzusammensetzung (2) gefüllt ist, eine Vorrichtung (4) anzuordnen, die dazu bestimmt ist, die Nahrungsmittelzusammensetzung kontinuierlich zusammenzudrücken und die Öffnung zu verschließen;
b) direkt in der Form die komprimierte Zusammensetzung mittels einer zum Pasteurisieren der Nahrungsmittelzusammensetzung geeigneten Hitzequelle vorzugaren.

2. Verfahren nach Anspruch 1, **dadurch gekennzeichnet, dass** es darin besteht, in das Innere des Körpers der Form (1) vor dem Einführen der Nahrungsmittelzusammensetzung (2) einen wärmeschrumpfenden Beutel (3) zu platzieren, der den Vorgartemperaturen standhält, der auf die Zusammensetzung vor dem Anbringen der Kompressionsvorrichtung (4) geklappt (R) wird.

3. Form zum Umsetzen des Verfahrens nach Anspruch 1 oder 2, **dadurch gekennzeichnet, dass** sich über der kegelstumpfförmigen Rotationsseitenwand (1A) eine zylindrische Wand (1C) befindet, in der die Verschluss- und Kompressionsvorrichtung (4) gleitet, die eine konkave kugelbruchteilförmige Innenform besitzt und auf die Oberseite der Nahrungsmittelzusammensetzung (2) oder auf den heruntergeklappten Teil (R) des wärmeschrumpfenden Beutels (3) einen ununterbrochenen Druck (P) ausübt, der die Zusammensetzung komprimieren und ihrem oberen Teil eine konvexe kugelbruchteilförmige Form verleihen kann.

4. Form nach Anspruch 3, **dadurch gekennzeichnet, dass** der ununterbrochene Druck (P), der von der Verschluß- und Kompressionsvorrichtung (4) auf die Nahrungsmittelzusammensetzung (2) ausgeübt wird, von einer Kompressions- und Verriegelungsvorrichtung (5) sichergestellt wird, die Mittel (6) des Typs Federn besitzt, die auf der Oberseite der Verschlussvorrichtung aufliegen können, und einstellbare Befestigungsmittel (7), die zu Verankerungsmitteln (8) gehören, die fest mit dem Körper der Form (1) verbunden sind.

5. Form nach Anspruch 4, **dadurch gekennzeichnet, dass** die Kompressionsmittel (6) des Typs Federn von zwei Teilen (12) und (13), die zueinander gleiten, gehalten werden, wobei der erste (12) fest mit der Kompressionsvorrichtung (5) und der zweite (13) mit der Verschlussvorrichtung (4) verbunden ist.

6. Form nach Anspruch 4, **dadurch gekennzeichnet, dass** die einstellbaren Befestigungsmittel (7) Rasten (7A) aufweisen, die dazu bestimmt sind, mit den Verankerungsmitteln (8) einzugreifen.

7. Form nach Anspruch 3, **dadurch gekennzeichnet, dass** der röhrenförmige zentrale Spieß (9) in seinem unteren Teil von einem axialen Träger (10) gehalten wird, der fest mit dem Boden (1B) des Körpers der Form (1) verbunden ist, und in seinem oberen Teil von einem axialen Träger (11), der fest mit der Verschlussvorrichtung (4) verbunden ist.

8. Form nach Anspruch 3, **dadurch gekennzeichnet, dass** die Verschlussvorrichtung (4) Kanäle (4A) aufweist, die dazu bestimmt sind, Dampf während des Vorgarens abzuleiten.
